Europäisches Patentamt

European Patent Office

Office européen des brevets

(19)

(11) Publication number: **0 024 574**
**B1**

(12) **EUROPEAN PATENT SPECIFICATION**

(45) Date of publication of patent specification: **27.07.83**

(51) Int. Cl.³: **G 01 N 21/41**

(21) Application number: **80104546.9**

(22) Date of filing: **01.08.80**

(54) Apparatus for determining the refractive index profile of optical fibres.

(30) Priority: **02.08.79 IT 6860079**

(43) Date of publication of application:
**11.03.81 Bulletin 81/10**

(45) Publication of the grant of the patent:
**27.07.83 Bulletin 83/30**

(84) Designated Contracting States:
**DE FR GB NL**

(56) References cited:
**US - A - 4 110 004**

**APPLIED OPTICS, Vol. 14, No. 4, April 1975,
New York M. IKEDA et al. "Refractive Index
Profile of a Graded Index Fiber; Measurement by
a Reflection Method" pages 814 to 815
OPTICAL AND QUANTUM ELECTRONICS, Vol.
11, No. 2, March 1979, London K. I. WHITE
"Practical Application of the Refracted Near-
Field Technique for the Measurement of Optical
Fibre Refractive Index Profiles" pages 185 to
196**

(73) Proprietor: **CSELT Centro Studi e Laboratori
Telecomunicazioni S.p.A.
Via Guglielmo Reiss Romoli, 274
I-10148 Turin (IT)**

(72) Inventor: **Costa, Bruno
Via R. Pilo, 44
Torino (IT)**

(74) Representative: **Riederer Freiherr von Paar zu
Schönau, Anton
Freyung 615 Postfach 2664
D-8300 Landshut (DE)**

(56) References cited:
**APPLIED OPTICS, Vol. 14, No. 10, October
1975, New York, A. PAPP et al. "Polarization
Optics of Index-Gradient Optical Waveguide
Fibers" pages 2406 to 2411.**

Courier Press, Leamington Spa, England.

# Apparatus for determining the refractive index profile of optical fibres

The present invention relates to an apparatus for determining the refractive index profile of an optical fibre, of the type comprising a source of a beam of light linearly polarized in a first plane, a beam splitting arrangement, an optical system, which on the one hand focusses light emitted by the source and passing through said beam splitting arrangement so as to be incident on an end face of the fibre and on the other hand directs the beam reflected by said face towards said beam splitting arrangement which in turn directs said reflected beam to means converting the light incident thereon into electrical signals and associated with means for processing said electrical signals, the fibre end face being immersed in a refractive index matching medium which is in contact with the surface of the optical system facing said fibre end face.

The refractive index profile of optical fibres plays an essential role in determining some of their basic characteristics such as light gathering efficiency, guiding properties and bandwidth. Knowledge of the index profile is therefore necessary to specify all these properties.

A reflection technique has been recently proposed in the literature in order to measure said profile. Said technique consists in focussing a light beam onto a fibre end face and in measuring the reflectve optical power. The reflected power allows the value of the fibre refractive index at the incidence point to be determined by applying the well-known Fresnel formulas.

Apparatuses applying reflection techniques have been described by W. Eckoff and E. Weidel in the paper "Measuring method for the refractive index profile of optical glass fibres" (Optical and Quantum Electronics, Vol. 7, No. 2, March 1975 pages 109—113); by M. Ikeda, M. Takeda and H. Yoshikiyo in the paper "Refractive index profile of a graded index fibre: measurement by a reflection method" (Applied Optics, Vol. 14, No. 4, April 1975 pages 814—815); and by B. Costa and B. Sordo in the paper "Measurements of refractive index profile in optical fibres: comparison between different techniques", presented at the 2nd European Conference on Optical Fibre Communication, Paris, 20—30 September 1976 pages 81—87.

More particularly, the paper by Costa and Sordo suggests filling the space between the end face of the fibre and the lens, which usually is a microscope objective, by an index matching liquid whereby the signal-to-noise ratio and the measuring accuracy can be greatly enhanced though the power level of the reflected light is lowered. This lower reflected level presents some difficulties with respect to stray reflections from the optical components which mask the reflected signal to light from the fibre end face.

On the other hand, the paper of Ikeda et al. discloses an apparatus comprising a source of a beam of light linearly polarized in a first plane, an optical system, which on the one hand focusses onto an end face of a fibre the beam emitted by the source and on the other hand directs the beam reflected by such face towards a beam splitter which collects said beam and at least a portion of the light reflected by the optical system and send the light to means converting the light into electrical signals and associated with means for processing said electrical signals, a $\pi/2$ phase shifting device traversed both by the beam focussed on the fibre and by the reflected beam, so that the latter is linearly polarized in a second plane orthogonal to the first one; the beam splitter is realized as a prism which directs toward the converting means only the light polarized in said second plane.

In this arrangement the stray reflections from the prism and the converting means are reduced, yet there are reflections from the optical system and from the $\pi/2$ phase shifting device which are much more annoying. These reflections affect the measurement in two ways. Firstly, they overlap the actual signal reflected by the fibre, changing its value; this is a series disadvantage when the far end of the fibre under test is immersed in a fluid with a refractive index very close to that of the fibre, in order to increase the sensitivity, as described in the above-mentioned paper: in this case in fact the reflected signal can be a ratio of $10^{-4}$ to the incident one and can be masked by the reflections from the optical system surfaces. Secondly, interference between the various reflected beams, due to the coherence of the light used (typically light emitted by a gas laser), gives rise to a power distribution varying in time so that the signal at the detector output is very unstable.

The aim of the invention is to provide an apparatus permitting accurate measurements while eliminating the reflections by the optical system and the interference between the various reflected beams.

According to the invention, the apparatus for determining the refractive index profile of an optical fibre of the above-mentioned type is characterized in that a $\pi/2$ phase shifting device which is also immersed in the refractive index matching medium is positioned between the optical system and the end face of the fibre so as to be traversed both by the incident beam and by the reflected beam, so that the latter is linearly polarized in a second plane orthogonal to the first one, and the beam splitting arrangement has polarising properties or is associated with means having polarizing properties so that only the light polarized in said second plane reaches said means for converting light. Thereby, both stray reflections from the optical system and from the $\pi/2$ phase shifting device and interference between reflected rays are eliminated and use of the index matching liquid is possible without difficulties relating to the lower reflection.

These and other characteristics of the invention will become clearer from the following description of a preferred embodiment thereof, given by way of non limitative example and schematically depicted in the annexed drawing.

In this drawing, a light source 1, for instance a laser, emits a light beam along the trajectory of which there are placed a chopper 2 that periodically chops the light beam in order to obtain light pulses, and a first polarizer 3 (unnecessary when the laser light is already linearly polarized). A beam splitter 4 divides the polarized light beam into a reflected partial beam and a transmitted partial beam. The reflected beam is collected by a first photodiode 5 that with a first amplifier 6 generates a reference signal. The transmitted beam on the contrary is sent towards fibre 7 under test and passes through a focussing optical system 8 and a $\pi/2$ phase shifting device, e.g. a $\lambda/4$ plate 9 inserted between the optical system and the fibre end face 7'.

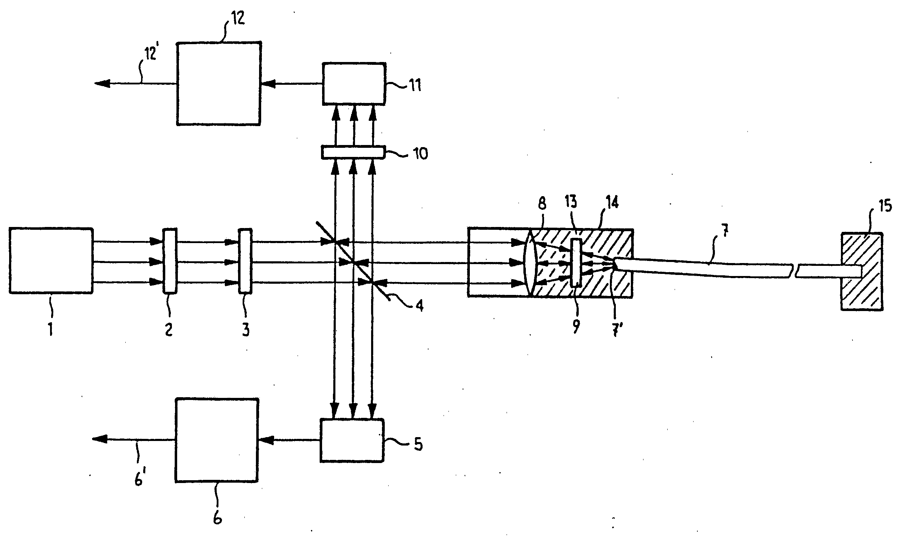

The beam splitter 4 collects the light reflected by the fibre end and having passed again through the $\lambda/4$ plate 9 nd the optical system 8, as well as the light reflected by the optical system 8, and sends it to a second polarizer 10, and hence to a second photodiode 11 connected to a second amplifier 12. Output 12' of said second amplifier 12 and output 6' of the first amplifier 6 are connected to measuring and recording means, not shown in the drawing, that give the value of the refractive index.

The polarizers 3 and 10 and the beam splitter 4 could be replaced by a Glan prism performing the same operations.

To increase the measurement sensitivity, the end portion of fibre 7 comprising the end face 7' is immersed in a medium 13 (e.g. an oil) with a refractive index close to that of the fibre and placed in a housing 14 applied to the optical system. In this medium also the $\lambda/4$ plate is immersed. The opposite fibre end is immersed in a refractive index matching medium 15, so as to prevent spurious reflections at that end.

To make the drawing simpler, the support of the end face 7' of the fibre 7 and the means for shifting step by step the fibre end inside housing 14 in order to measure the reflected power at different points of a diametral line of said end, have not been represented.

The drawing shows also that the end portion of fibre 7 comprising the end face 7' is slightly inclined with respect to the axis of the housing 14. In fact an inclination of 5—10° eliminates a number of instability phenomena of the electrical signal that may occur when the fibre is aligned with the axis of the housing 14 and that are due to spurious reflection on the $\lambda/4$ plate 9. Of course, taking into account this inclination, focussing of the light beam incident on face 7' must take place on the diametral line orthogonal to the drawing plane, so that the light reflected by all the measurement points covers the same optical path.

The operation of the described apparatus is as follows: the light beam, made pulsating by the chopper 2 and linearly polarized by the polarizer 3, partly passes through the beam splitter 4 and is focussed by the optical system 8 on the end face 7' of the fibre 7, where it is reflected. Due to the presence of the $\lambda/4$ plate the beam incident on the end face 7' will be circularly polarized, with the consequence that the reflected power is essentially independent of the angle of incidence, such that polarization effects during reflection are avoided.

The light reflected by face 7' passes again through the $\lambda/4$ plate 9 and is again linearly polarized, yet in an orthogonal plane to that of the beam outgoing from the polarizer 3. Said light will be collected by the beam splitter 4, together with a portion of the light reflected by the optical system 8. Said light has not passed through the $\lambda/4$ plate 9, and therefore its polarization plane is the same as that of the light outgoing from polarizer 3.

A suitable arrangement of polarizer 10 will let through only the light reflected by the fibre, and not the light reflected by the optical system 8. A possible residual spurious component however would not cause interference phenomena, us the beams are polarized in orthogonal planes. The light outgoing from polarizer 10 is then collected by the photodiode 11, and the resulting electrical signals, amplified by amplifier 12, are sent to the computing and recording means that, from the value of the reflected power, obtain the value of the refractive index according to the well known Fresnel formula

$$R = \left( \frac{n_o - n_r}{n_o + n_r} \right)^2$$

where R is the reflected power, and $n_r$, $n_o$ are respectively the refractive indexes of the fibre at the reflection point, and of the medium surrounding the fibre.

Once the measurements on a point of end face 7' of the fibre are terminated, the fibre is displaced so that the beam light impinges on the subsequent point and the described operations are repeated.

**Claims**

1. Apparatus for determining the refractive index profile of an optical fibre, comprising a source (1) of a beam of light linearly polarized in a first plane, a beam splitting arrangement (4), an optical system (8), which on the one hand focusses light emitted by the source (1) and passing through said beam splitting arrangement so as to be incident on an end face (7') of the fibre and on the other hand directs the beam reflected by said face towards said beam splitting arrangement (4) which in turn directs said reflected beam to means (11) converting the light incident thereon into electrical signals and associated with means (12) for processing said electrical signals, the fibre end face (7') being immersed in a refractive index matching medium (13) which is in contact with the surface of the optical system facing said fibre end face, characterized in that a $\pi/2$ phase shifting device (9) which is also immersed in the refractive index matching medium (13) is positioned between the optical system (8) and the end face (7') of the fibre (7) so as to be traversed both by the incident beam and by the reflected beam, so that the latter is linearly polarized in a second plane orthogonal to the first one, and the beam splitting arrangement (4) has polarizing properties or is associated with means (10) having polarizing properties so that only the light polarized in said second plane, reaches said means (11) for converting light.

2. Apparatus according to claim 1, characterized in that the axis of the fibre end portion containing said end face (7') is inclined with respect to the beam propagation direction.

**Revendications**

1. Appareil pour la détermination du profil de l'indice de réfraction d'une fibre optique, comprenant une source (1) d'un faisceau de lumière polarisée rectilinéairement en un premier plan, un dispositif (4) de division du faisceau, un système optique (8) apte d'un côté à focaliser la lumière émise par la source (1) et passant par le dispositif de division du faisceau de façon à la faire arriver sur une face terminale (7') de la fibre, et de l'autre côté à envoyer le faisceau réfléchi par ladite face vers le dispositif (4) de division du faisceau que envoie à son tour le faisceau réfléchi vers des dispositifs (11) qui convertissent la lumière incidente sur eux en des signaux électriques et sont associés à des moyens de traitement desdits signaux, la face terminale (7') de la fibre étant immergée dans un moyen (13) d'adaptation de l'indice de réfraction, qui est en contact avec la surface du système optique tournée vers ladite face terminale de la fibre, caractérisé en ce qu'entre le système optique (8) et la face terminale (7') de la fibre (7) il y a un dispositif (9) de déphasage de $\pi/2$ qui est lui aussi immergé dans le moyen (13) d'adaptation de l'indice de réfraction et est traversé par le faisceau incident aussi bien que par le faisceau réfléchi, de sorte que ce dernier est polarisé rectilinéairement en un second plan perpendiculaire au premier, et en ce que le dispositif (4) de division du faisceau a des propriétés polarisantes ou est associé à des moyens (10) ayant des propriétés polarisantes de sorte que seulement la lumière polarisée dans ce second plan arrive aux dispositif (11) de conversion de la lumière.

2. Appareil selon la revendication 1, caractérisé en ce que l'axe de la partie d'extremité de la fibre contenant ladite face terminale (7') est incliné par rapport à la direction de propagation du faisceau.

**Patentansprüche**

1. Vorrichtung zum Bestimmen des Brechungsindexprofils einer optischen Faser, mit einer Quelle (1) eines linear in einer ersten Ebene polarisierten Lichtbündels, einer strahlenteilenden Anordnung (4), einem optischen System (8), das einerseits von der Quelle (1) emittiertes und durch die strahlenteilende Anordnung tretendes Licht so fokussiert, daß es auf eine Endfläche (7') der Faser fällt, und andererseits das von dieser Endfläche reflektierte Bündel auf die strahlenteilende Anordnung (4) richtet, die das reflektierte Bündel ihrerseits zu das darauf einfallende Licht in elektrische Signale umsetzenden Einrichtungen (11), denen Einrichtungen (12) zum Verarbeiten der elektrischen Signale zugeordnet sind, richtet, wobei die Faserendfläche (7') in ein den Brechungsindex anpassendes Medium (13) eingetaucht ist, das sich in Kontakt mit derjenigen Fläche des optischen Systems befindet, die zur Faserendfläche gerichtet ist, dadurch gekennzeichnet, daß ein ($\pi/2$)-Phasenschieber (9), der ebenfalls in das den Brechungsindex anpassende Medium (13) getaucht ist, zwischen dem optischen System (8) und der Endfläche (7') der Faser (7) so angeordnet ist, daß er sowohl vom einfallenden Bündel als auch vom reflektierten Bündel durchsetzt wird, so daß das reflektierte Bündel in einer zweiten, zur ersten Ebene orthogonalen Ebene linear polarisiert wird, und daß die strahlenteilende Anordnung (4) polarisierende Eigenschaften aufweist oder mit Einrichtungen (10) mit polarisierenden Eigenschaften so ausgestattet ist, daß nur das in der zweiten Ebene polarisierte Licht die Einrichtung (11) zum Umsetzen des Lichts erreicht.

2. Vorrichtung nach Anspruch 1, dadurch gekennzeichnet, daß die Achse des die Endfläche (7') enthaltenden Endteils der Faser in Bezug zur Fortschreitungsrichtung des Bündels geneigt angeordnet ist.